# EUROPÄISCHE PATENTSCHRIFT

(11) **EP 1 648 809 B1**
(45) Veröffentlichungstag und Bekanntmachung des Hinweises auf die Patenterteilung: **30.04.2008**
(21) Anmeldenummer: 04740761.4
(22) Anmeldetag: 08.07.2004
(51) Int. Cl.: B65H 59/40, G01L 5/10

(54) **GEHÄUSE FÜR EINEN FADENSPANNUNGSAUFNEHMER**
HOUSING FOR A THREAD TENSION SENSOR
BOITIER POUR CAPTEUR DE TENSION DE FIL

(30) Priorität: 22.07.2003 DE 10333202
(43) Veröffentlichungstag der Anmeldung: 26.04.2006
(73) Patentinhaber: Hottinger Baldwin Messtechnik GmbH, 64293 Darmstadt (DE)
(72) Erfinder: HELMER, Thomas, 64569 Nauheim (DE)
(74) Vertreter: Behrens, Helmut
(86) Internationale Anmeldenummer: PCT/EP2004/007450
(87) Internationale Veröffentlichungsnummer: WO 2005/014455

(56) Entgegenhaltungen:
- DE-A- 10 117 879
- DE-A- 19 547 572

## Beschreibung

Die Erfindung betrifft ein Gehäuse für einen Fadenspannungaufnehmer gemäß dem Oberbegriff des Patentanspruchs 1.

Bei der Verarbeitung und Qualitätskontrolle von Fäden, Fasern und Garnen ist die Fadenspannung eine wesentliche Prozeßgröße. Durch die Erfassung der Fadenspannung eines durchlaufenden Fadens können Rückschlüsse auf dessen Qualität, auf einen Fadenbruch und dessen Fadenbruchrate gezogen werden. An entsprechenden Maschinen zur Verarbeitung derartiger Fäden zum Texturieren, Spinnen, Spulen, Zwirnen, Scheren, Zetteln, Weben, Stricken, Nähen und dergleichen werden heute Fadenspannungsaufnehmer in großer Anzahl eingesetzt, an denen die einzelnen Fäden vorbeigeführt werden. Die Fadenspannungsaufnehmer erfassen dabei die Kraft des umgelenkten Fadens und wandeln diese in ein elektrisches Signal um, aus der die jeweilige Fadenspannung errechnet wird. Zur Fadenumlenkung werden meist Fadenführungsvorrichtungen vorgesehen, die die durchlaufenden Fäden V- oder W-förmig um einen Meßstift oder eine Meßrolle umlenken. Dadurch wird in dem Meßstift oder der Meßrolle die radiale Kraft erfaßt, aus der die Fadenzugkraft mit Hilfe des Umschlingungswinkels errechenbar ist. Eine derartige Erfassung der Radialkraft wird heute vielfach mit Kraftaufnehmern realisiert, die Biegefedern oder Membrane enthalten, an denen Dehnungsmeßstreifen appliziert sind. Die Kraftaufnehmer werden von einem staub- und feuchtigkeitsgeschützten Gehäuse umgeben, und bilden mit der Fadenführungsvorrichtung meist eine Montageeinheit.

Ein derartiger Fadenspannungsaufnehmer ist aus der DE 197 16 134 C2 bekannt, der aus einem rechteckigen Gehäuseteil besteht, an dem die messenden Aufnehmerteile aufwendig montierbar befestigt sind. Dabei enthält das Gehäuseteil einen kammerartigen Innenraum, an dessen Seitenwände im unteren Teil ein plattenförmiger Kraftaufnehmer eingelassen ist, in dessen Mittenbereich eine Membran mit darauf applizierten Dehnungsmeßstreifen vorgesehen ist. Auf dieser Membran stützt sich ein senkrechter Stößel zur Kraftübertragung ab, der über Führungselemente in seiner Lage fixiert wird. Dabei sind die Führungselemente ebenfalls in die Seitenwände eingelassen und bilden mit diesen eine feste Verbindung. Im oberen Teil ist am Stößel ein Fadenumlenkungselement vorgesehen, durch den der durchlaufende Faden V-förmig aus seiner Ursprungslage umgelenkt wird und somit durch seine Spannung eine Kraft über den Stößel auf die Membran überträgt, die der Fadenspannung proportional ist. Da ein derartiger Fadenspannungsaufnehmer nur in einzelnen Fertigungsschritten in seinem Gehäuseteil montierbar ist, ist zu seiner Herstellung eine relativ große Montagezeit erforderlich, die meist auch noch viele manuelle Montageschritte notwendig macht und somit relativ hohe Herstellungskosten verursacht. Dies ist insbesondere von Bedeutung, da an derartigen Verarbeitungsmaschinen teilweise einige hundert von Fäden verarbeitet werden und dafür jeweils ein separater Fadenspannungsaufnehmer erforderlich ist. Des weiteren erfordert ein derartiger Fadenspannungsaufnehmer eine relativ hohe Einbautiefe, die an den vorgenannten Verarbeitungsmaschinen häufig nicht zur Verfügung steht oder einen zu großen Umlenkwinkel notwendig macht.

Aus der DE 195 47 572 A1 ist eine Fadenspannungsmeßvorrichtung bekannt, die nur eine sehr geringe Einbautiefe besitzt. Dabei ist als Fadenspannungsaufnehmer ein sogenannter Doppelbiegebalken mit Dehnungsmeßstreifen vorgesehen, der parallel zu seiner Einbaulage in ein Gehäuseteil eingeschraubt ist. Dabei ist dieser flache Doppelbiegebalken mit seinem Fußteil an dem Gehäuse befestigt, das eine Aufnehmerkammer für den Doppelbiegebalken enthält. Am Kopfteil des Doppelbiegebalkens ist ein in den Innenraum ragender Krafteinleitungsarm angeordnet, an dem eine senkrecht nach außen ragende Meßachse befestigt ist. Der Aufnehmer ist erheblich kleiner als der Innenraum der Gehäusekammer und mit dieser durch zwei Schraubverbindungen an der Gehäuserückwand befestigt. Die Gehäusekammer ist nach außen durch eine anschraubbare Abdeckplatte verschlossen, aus der in der Mitte lediglich die Meßachse herausragt, auf der eine Meßrolle drehbar gelagert ist. In Längsrichtung ist auf einer Mittellinie der Abdeckkappe seitlich zur Meßachse noch jeweils eine Umlenkrolle vorgesehen, die den Faden W-förmig um die Meßrolle führt und eine Fadenführungsvorrichtung darstellt. Bei einem durchlaufenden Faden wird somit auf die Meßrolle eine radiale Kraft ausgeübt, die durch den Doppelbiegebalkenaufnehmer in ein elektrisches Signal umgewandelt wird, das der Fadenspannung proportional ist. Diese Fadenspannungsmeßvorrichtung hat den Nachteil, daß zur Montage des Aufnehmers dieser im Gehäuse sehr genau ausgerichtet werden muß, um mit diesem verschraubt werden zu können. Insbesondere hat ein derartiger Aufnehmer den Nachteil, daß bei der Inbetriebnahme der die Fäden verarbeitenden Maschine oder bei jedem Fadenwechsel sowie jedem Reißen des Fadens jeder Faden manuell um die Meß- und Umlenkrollen gelegt werden muß. Dies ist besonders arbeits- und kostenintensiv, wenn man bedenkt, daß diese Fadenmeßvorrichtungen beim Einsatz in Texturier- oder Webmaschinen in großer Anzahl zum Einsatz kommen.

Der Erfindung liegt deshalb die Aufgabe zugrunde, eine derartige Fadenspannungsmeßvorrichtung oder deren Teile so weiterzuentwickeln, daß sie kostengünstig herstellbar und zu montieren sind und der zu messende Faden möglichst selbsttätig einlegbar ist.

Diese Aufgabe wird durch die in Patentanspruch 1 angegebene Erfindung gelöst. Weiterbildungen und vorteilhafte Ausführungsbeispiele der Erfindung sind in den Unteransprüchen angegeben.

Die Erfindung hat den Vorteil, daß in dem zweiteiligen Gehäuse der Fadenspannungsmeßvorrichtung eine paßgenaue Einsteckkammer für einen separat zu fertigenden Meßteil vorgesehen ist, in dem dieser zur vereinfachten Montage paßgenau eingesteckt wird und somit sogleich fixiert ist. Durch den zweiteiligen aufeinandersetzbaren Gehäuseteil mit den in diesen einsteckbaren Aufnehmerteil ist eine modulartig aufgebaute Fadenspannungsmeßvorrichtung geschaffen, die weitgehend maschinell herstellbar, schnell montierbar und deren Verschleißteile auf einfache Weise austauschbar sind.

Die Erfindung hat weiterhin den Vorteil, daß durch die vorgesehene Fadeneinlaufstege im Zusammenwirken mit den Fadeneinweisern ein selbsttätiges Einfädeln der zu messenden Fäden um die W-förmig angeordnete Fadenführungseinrichtung nach einem Fadenriß oder zur Inbetriebnahme möglich ist. Insbesondere hat dabei die spezielle Ausführung der Fadenführungseinrichtung mit den einsteckbaren Keramikstiften den Vorteil, daß diese Meßvorrichtung lange Standzeiten aufweist, den Aufnehmer thermisch entkoppelt und die Verschleißteile schnell und kostengünstig austauschbar sind.

Eine besondere Ausführung der Erfindung, bei der in der zweiten Gehäusekammer eine Meßelektronikplatine einsetzbar ist, hat den Vorteil, daß die gesamte Fadenspannungsmeßvorrichtung bereits werksseitig abgleich- und tarierbar ist und so auf einfachste Weise an den Texturier- oder Webmaschinen einsetzbar oder austauschbar ist.

Bei einer weiteren besonderen Ausbildung der Erfindung, bei der verschiedenfarbige Qualitäts- und Überwachungsdioden am Gehäuse vorgesehen sind, hat den Vorteil, daß bereits bei einer Vielzahl von eingesetzten Fadenspannungsmeßvorrichtungen überblicksmäßig erkennbar ist, wenn einzelne Fäden gerissen sind oder Qualitätsgrenzwerte nicht eingehalten wurden.

Die Erfindung wird anhand eines Ausführungsbeispiels, das in der Zeichnung dargestellt ist, näher erläutert. Es zeigen:
- Fig. 1:: die Vorderansicht eines einsteckbaren Fadenspannungsaufnehmers;
- Fig. 2:: die Seitenansicht des Fadenspannungsaufnehmers;
- Fig. 3:: die Vorderansicht einer montierten Fadenspannungsmeßvorrichtung, und
- Fig. 4:: die Seitenansicht einer montierten Fadenspannungsmeßvorrichtung.

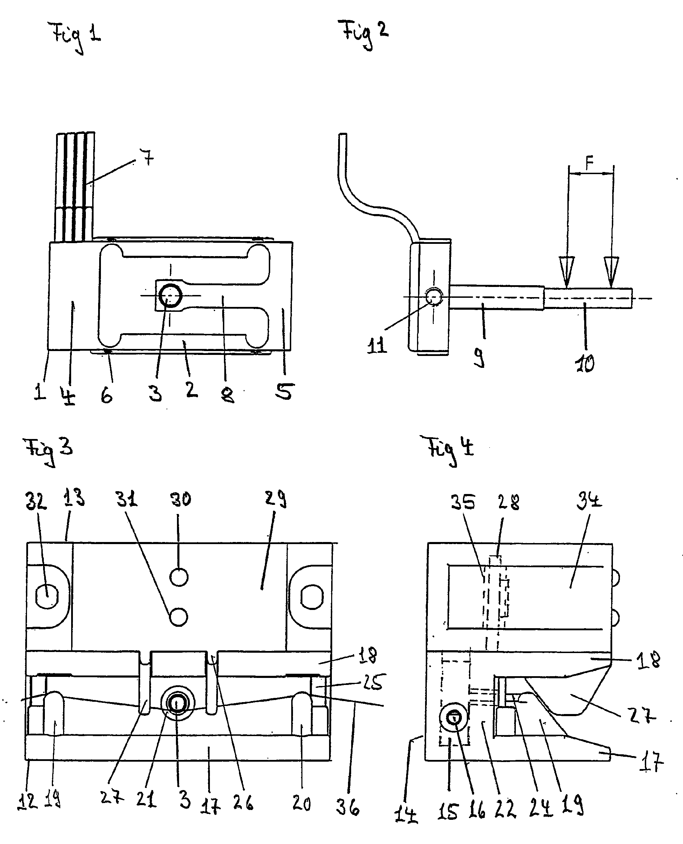

In Fig. 1 und Fig. 2 der Zeichnung ist ein im Grunde bekannter Fadenspannungsaufnehmer 1 dargestellt, der in das erfindungsgemäße Gehäuse einsteckbar ist und aus einem flachen Doppelbiegebalken 2 mit einer seitlichen Meßachse 3 besteht.

Ein derartiger Meßteil einer Fadenspannungsmeßvorrichtung ist im Grunde bereits aus der vorgenannten DE 195 47 572 A1 bekannt, und besteht aus zwei Biegebalken 2, die durch ein gemeinsames Fuß- 4 und Kopfteil 5 zu einem Doppelbiegebalken verbunden sind. Auf den Dünnstellen der Biegebalken 2 sind Dehnungsmeßstreifen 6 appliziert, die als Wheatstone'sche Meßbrücke verschaltet und über eine vieradrige Leitung 7 herausgeführt sind. Am Fußteil 4 ist ein Krafteinleitungsarm 8 angeordnet, der in den Zwischenraum der Biegebalken 2 ragt und eine Bohrung besitzt, in der ein seitlich senkrecht abstehender Meßstift 3 als Meßachse befestigt ist. Der Meßstift 3 dient zur Krafteinleitung der Fadenspannung und besteht aus einer Edelstahlhülse 9, in die ein Keramikstift 10 eingeklebt ist. Zur verbesserten Fixierung ist seitlich im Fußteil 4 noch eine Gewindebohrung 11 vorgesehen, mit der der Aufnehmer 1 mit dem Gehäuse verschraubt wird. Der Fadenspannungsaufnehmer ist für Fadenzugspannungen bis ca. 200 cN ausgelegt und besteht vorzugsweise aus einem flachen Aluminiummaterial, aus dem die Doppelbiegebalkenkontur ausgearbeitet ist. Der Aufnehmerteil ist dabei ca. 30 mm lang, 15 mm hoch und ca. 3 mm breit und weist einen ca. 25 mm langen Meßstift 3 auf.

Ein derartig ausgebildeter Doppelbiegebalken ist in großer Stückzahl nahezu vollautomatisch und deshalb kostengünstig herstellbar. Hier setzt die Erfindung an, indem als Ziel eine modulartig aufgebaute Fadenspannungsmeßvorrichtung angestrebt wird, wobei die Einzelkomponenten selbsttätig vorfertigbar sein sollen und die gleichzeitig im Betrieb mit geringstem manuellen Aufwand einricht- und betreibbar sind. Dieses Ziel wurde durch die Schaffung eines erfindungsgemäßen Gehäuses für einen leicht herstellbaren und genauen Fadenspannungsaufnehmer 1 realisiert. Dieser ist insbesondere als Doppelbiegebalkenaufnehmer 2 ausgebildet, um ein Gehäuse mit vorzugsweise geringer Bautiefe zu erhalten.

Ein derartiges Gehäuse ist in Fig. 3 und Fig. 4 der Zeichnung dargestellt, das aus zwei kammerartigen Teilen 15, 35 zusammenfügbar ist, in der die Meßteile 1, 28 montagefreundlich einsteckbar sind und in der durch eine spezielle Fadenführungsvorrichtung die zu messenden Fäden weitgehend selbsttätig einfädelbar sind. Dazu ist ein zweiteiliges Spritzgußgehäuse vorgesehen, das aus einem ersten unteren Teil 12 und einem zweiten oberen Teil 13 zusammensteckbar ist. Derartige Spritzgußteile 12, 13 können vorzugsweise aus einem temperaturbeständigen Kunststoff, aus Aluminium- oder Zinkspritzgußteilen bestehen, die insbesondere in großen Stückzahlen schnell und kostengünstig herstellbar sind. Dabei besteht das erste bzw. das Unterteil 12 aus einer rechteckigen Außenform, in der im Anschluß an die Rückwand 14 als Montagewand eine Einsteckkammer 15 angeordnet ist, die längs der Vorderfront 29 verläuft und zur Aufnahme vorzugsweise des Doppelbiegebalkens 1 dient. Diese Einsteckkammer 15 ist so ausgebildet, daß der Fadenspannungsaufnehmer 1 paßgenau in den Längsschlitz einsteckbar und dadurch bereits in seiner Endlage fixiert ist. Vorzugsweise ist die Einsteckkammer 15 im Bereich des Aufnehmerfußteils 4 leicht verjüngt ausgebildet, so daß der Aufnehmer 1 darin kraftschlüssig befestigt werden kann. Zur Austauschbarkeit ist die vorliegende Einsteckkammer 15 allerdings nicht nach unten verjüngt ausgebildet, sondern enthält eine seitliche Bohrung 16, durch die der Aufnehmer über eine Schraubverbindung im Gehäuse fixiert wird.

Vor der Einsteckkammer 15 ist im unteren Gehäuseteil 12 die Fadenführungsvorrichtung angeordnet, die im wesentlichen durch zwei auskragende Führungswände 17, 18 gebildet wird, wobei an der unteren Wand 17 zwei seitliche Einlaufstege 19, 20 angeordnet sind. Diese Einlaufstege 19, 20 sind symmetrisch zur Aussparung 21 für den Meßstift 3 und parallel zu diesem an der unteren Führungswand 17 angegossen. Dabei verlaufen die Einlaufstege 19, 20 schräg abfallend zur unteren Führungswand 17, um eine selbsttätige Einfädelung zu ermöglichen. Auf den Einlaufstegen 19, 20 sind parallel zur unteren Führungswand 17 Aussparungen und eine Bohrung zur Vorderwand 22 vorgesehen, in der zylindrische Keramikstifte 24 einschiebbar sind, die im Zusammenwirken mit der Meßspitze 3 eine W-förmige Fadenauslenkung bewirken. Dabei ist vorzugsweise nur eine geringe Auslenkung zur Geraden von ca. 7,5° vorgesehen, durch die der Fadenlauf nur wenig beeinträchtigt wird. Zur verschleißarmen Fadenführung nach hinten sind auch noch an der Vorderwand 22 zwei senkrechte Keramikstifte 25 eingesetzt.

In der oberen Führungswand 18 des unteren Gehäuseteils 12 sind seitlich zur Meßspitze 3 und parallel zu dieser noch je ein Führungsschlitz 26 angeordnet, in die zwei Fadeneinweiser 27 eingreifen. Diese Fadeneinweiser 27 sind vorzugsweise an dem oberen Gehäuseteil 13 angeordnet und dienen hauptsächlich zum selbsttätigen Einfädeln des zu messenden Fadens 36 um die Meßspitze 3. Dazu sind diese nach unten nasenförmig ausgebildet und mit schräg abgerundeten Führungskanten versehen. Dabei wird die selbsttätige Einfädelung vorzugsweise durch Vakuumdüsen die die zu verarbeitenden Fäden 36 von einer Garnrolle zu einer Verarbeitungsstation selbsttätig oder manuell unterstützt befördern. Die Fadeneinweiser können auch direkt an der oberen Führungswand 18 befestigt sein, gestatten allerdings durch die Führungsschlitze 26 eine bessere Einsteckbarkeit bei der Zusammenfügung der beiden Gehäuseteile 12, 13 während der Montage.

Das obere Gehäuseteil 13 ist ebenfalls als Spritzgußteil ausgebildet und besitzt etwa die gleiche Größe wie das Unterteil 12. Dabei bildet das nach oben geschlossene obere Gehäuseteil 13 eine Innenkammer 34, durch die das untere Gehäuseteil 12 nach der Verbindung der beiden Gehäuseteile 12, 13 abgedeckt bzw. verschlossen ist. Im oberen Gehäuseteil 13 sind vorzugsweise Führungsnuten 35 vorgesehen, in die eine Schaltplatine mit einer Meßelektronik 28 einschiebbar ist. Diese ist über eine Steck- oder Lötverbindung mit dem Aufnehmer 1 verbunden und enthält vorzugsweise Verstärkerbauteile, Abgleich- und Anpaßelemente, wie sie bei derartigen Aufnehmern 1 bekannt und in der Regel vorgesehen sind. Am oberen Gehäuseteil 13 können deshalb auch Steckverbindungen angeordnet sein, mit der die komplett montierten und kalibrierten Fadenspannungsmeßvorrichtungen 1, 28 schnell einsetz- oder austauschbar sind. Die Meßelektronik 28 kann aber auch Auswerteschaltungen enthalten, durch die sogleich vorgegebene Qualitätsabweichungen oder ein Fadenbruch anzeigbar ist. Dazu sind an der Vorderfront 29 des oberen Gehäuseteils 13 noch jeweils eine grüne Leuchtdiode 30 für eine Qualitätsabweichung und eine rote Leuchtdiode 31 zur Fadenbruchsignalisierung angeordnet.

Beide Gehäuseteile 12, 13 werden nach dem Einstecken des Doppelbiegebalkens 1 und der Meßelektronik 28 miteinander verbunden. Dazu sind vorzugsweise zwischen den Gehäuseteile 12, 13 Führungsschlitze und -stege vorgesehen, die ineinander passen oder einschnappbar sind. Die Verbindung der Gehäuseteile 12, 13 kann aber auch durch eine Schraubverbindung erfolgen. Zur Befestigung des gesamten Gehäuses an dem vorgesehenen Maschinenteil sind noch angegossene Durchgangsbohrungen 32 an dem oberen Gehäuseteil 13 vorgesehen. In einem derartigen Gehäuse können auch Fadenspannungsaufnehmer 1 mit Einfachbiegebalken, Membrankraftaufnehmer oder andere modulartig ausgebildete Fadenspannungsaufnehmer eingeschoben werden. Dazu müßten diese lediglich mit einer seitlichen Meßspitze 3 ausgestattet sein und in den Außenabmessungen so hergestellt werden, daß sie in die Einsteckkammer 15 passen.

## Patentansprüche

1. Gehäuse für einen Fadenspannungsaufnehmer (1) das mindestens eine Kammer (15) zur Aufnahme des Fadenspannungsaufnehmers (1) als erstes Gehäuseteil (12) enthält und das durch ein zweites Gehäuseteil (13) abgedeckt wird, wobei an mindestens einem Gehäuseteil (12, 13) eine Fadenführungsvorrichtung vorgesehen ist, die den zu messenden Faden (36) W-förmig um eine Meßachse (3) des Aufnehmers (1) lenkt, **dadurch gekennzeichnet, daß** das erste Gehäuseteil (12) eine Einsteckkammer (15) zur paßgenauen Fixierung des Aufnehmers (1) enthält, die eine seitliche Aussparung (21) zur Durchführung der Meßachse (3) aufweist, vor der als Fadenführungsvorrichtung mindestens zwei Fadeneinlaufstege (19, 20) und dazwischen mindestens zwei Fadeneinweiser (27) vorgesehen sind und daß das zweite Gehäuseteil (13) eine Innenkammer (34) enthält, die fest mit dem ersten Gehäuseteil (12) verbunden ist.

2. Gehäuse nach Anspruch 1, **dadurch gekennzeichnet, daß** die Einsteckkammer (15) parallel zur rückwärtigen Montagewand (14) angeordnet ist und daß die Einsteckkammer (15) gegenüber der Fadenführungsvorrichtung durch eine Vorderwand (22) getrennt ist, wobei die Innenabmessungen der Einsteckkammer (15) im wesentlichen den Außenabmessungen des Doppelbiegebalkens als Fadenspannungsaufnehmer (1) entsprechen.

3. Gehäuse nach Anspruch 1 oder 2, **dadurch gekennzeichnet, daß** die Fadenführungsvorrichtung aus zwei äußeren Fadeneinlaufstegen (19, 20) und zwei inneren Fadeneinweisern (27) besteht, die seitlich und symmetrisch zur Meßachse (3) angeordnet und als parallele Stege (19, 20, 27) zur Meßachse (3) ausgebildet sind.

4. Gehäuse nach Anspruch 3, **dadurch gekennzeichnet, daß** die Fadeneinlaufstege (19, 20) an ihrer Unterseite mit einer unteren Führungswand (17) verbunden sind, sowie eine dazu parallele Führungskante aufweisen, die parallel zur Meßachse (3) Aussparungen enthält, in die als Führungsfläche Keramikstifte (24) eingesetzt sind und nach vorne je eine schräg abfallende abgerundete Führungskante aufweisen, die zur Einfädelung dienen.

5. Gehäuse nach Anspruche 4, **dadurch gekennzeichnet, daß** die Fadeneinweiser (27) als nach unten gerichtete nasenförmige Stege ausgebildet sind, die parallel und seitlich zur Meßachse (3) verlaufen und in Bezug auf die Vorderwand (22) vor den Keramikstiften (24) enden.

6. Gehäuse nach einem der Ansprüche 3 bis 5, **dadurch gekennzeichnet, daß** im Bereich des Fadenlaufs vor und parallel zur Vorderwand (22) an den Einlaufstegen (19, 20) zusätzliche Keramikstifte (25) angeordnet sind.

7. Gehäuse nach einem der vorhergehenden Ansprüche, **dadurch gekennzeichnet, daß** die Fadeneinweiser (27) an dem zweiten Gehäuseteil (13) befestigt sind und durch zwei Führungsschlitze (26) in den Fadenführungsbereich des ersten Gehäuseteils (12) einsteckbar hineinragen.

8. Gehäuse nach einem der vorhergehenden Ansprüche, **dadurch gekennzeichnet, daß** das zweite Gehäuseteil (13) eine Innenkammer (34) enthält, die so mit dem ersten Gehäuseteil (12) verbindbar ist, daß die Außenflächen der Innenkammer (34) das erste Gehäuseteil (12) verschließen.

9. Gehäuse nach einem der vorhergehenden Ansprüche, **dadurch gekennzeichnet, daß** das zweite Gehäuseteil (13) Führungsnuten (35) enthält, in die mindestens eine Platine mit einer Meßelektronik (28) einsteckbar ist.

10. Gehäuse nach einem der vorhergehenden Ansprüche, **dadurch gekennzeichnet, daß** am zweiten Gehäuseteil (13) Leuchtdioden (31, 32) zur Qualitätsanzeige und/oder Fadenabreißanzeige vorgesehen sind.

11. Gehäuse nach einem der vorhergehenden Ansprüche, **dadurch gekennzeichnet, daß** die Gehäuseteile (12, 13) als Spritzgußteile ausgebildet sind, die aus einem Kunststoff-, Aluminium- oder Zinkmaterial bestehen.

12. Gehäuse nach einem der vorhergehenden Ansprüche, **dadurch gekennzeichnet, daß** im Gehäuse mindestens ein Fadenspannungsaufnehmer (1) als eigenständige Baueinheit integriert ist, der als flacher Doppelbiegebalken (2) ausgebildet ist und eine nach vorn herausragende Meßachse (3) aufweist, die als Rohrhülse (9) ausgebildet und in der ein Keramikstift (10) eingeklebt ist.

13. Gehäuse nach einem der vorhergehenden Ansprüche, **dadurch gekennzeichnet, daß** im Gehäuse zusätzlich eine Meßelektronikplatine (28) als eigenständige Baueinheit integriert ist, die über eine Löt- oder Steckverbindung mit dem Fadenspannungsaufnehmer (1) und einer externen Auswerte- und/oder Stormversorgungsvorrichtung verbindbar ist.

## Claims

1. Housing for a thread tension sensor (1) comprising at least one chamber (15), as a first housing part (12), for accommodation of the thread tension sensor (1), which is covered by a second housing part (13), with a thread-guiding device provided on at least one housing part (12, 13), which directs the thread to be measured (36) in the shape of a W about a measuring pin (3) of the sensor (1), **characterised in that** the first housing part (12) encompasses a plug-in chamber (15) for fixing of the sensor (1) in a precisely fitting manner, provided with a lateral recess (21) for guiding the measuring pin (3) therethrough, and **in that** in front of the chamber at least two thread-feeding webs (19, 20) are arranged as a thread-guiding device, with at least two thread-directing elements (27) being provided therebetween, and **in that** the second housing part (13) encompasses an inner chamber (34) which is permanently mounted to the first housing part (12).

2. Invention according to claim 1, **characterised in that** the plug-in chamber (15) is arranged parallel to the rear mounting wall (14) and **in that** the plug-in chamber (15) is separated from the thread-guiding device by a front wall (22), the inside dimensions of the plug-in chamber (15) essentially corresponding to the outside dimensions of the double bending beam as the thread tension sensor (1).

3. Housing according to claim 1 or 2, **characterised in that** the thread-guiding device comprises two outer thread-feeding webs (19, 20) and two inner thread-directing elements (27) arranged laterally and symmetrically to the measuring pin (3) and designed as parallel webs (19, 20, 27) to the measuring pin (3).

4. Housing according to one of the preceding claims, **characterised in that** the thread-feeding webs (19, 20) are mounted, on their bottom surface, to a lower guide wall (17), and are provided with a guiding edge which is parallel thereto and which comprises recesses arranged parallel to the measuring pin (3), in which ceramic pins (24) are inserted as guide surface and which are provided, toward the front, with a bevelled, rounded guide edge each which serves for threading.

5. Housing according to one of the preceding claims, **characterised in that** the thread directing elements (27) are designed as downward-pointing, nose-shaped webs running parallel alongside the measuring pin (3) and ending, with respect to the front wall (22) in front of the ceramic pins (24).

6. Housing according to one of the preceding claims, **characterised in that** additional ceramic pins (25) are arranged on the thread-feeding webs (19, 20) in the area where the thread is running in front of and parallel to the front wall (22).

7. Housing according to one of the preceding claims, **characterised in that** the thread-directing elements (27) are fixed to the second housing part (13), and through two guide slots (26) project into the thread-guiding area of the first housing part (12) in such a way that they may be plugged in.

8. Housing according to one of the preceding claims, **characterised in that** the second housing part (13) comprises an inner chamber (34) which may be linked to the first housing part (12) in such a way that the outside surfaces of the inner chamber (34) close the first housing part (12).

9. Housing according to one of the preceding claims, **characterised in that** the second housing part (13) is provided with guide grooves (35) into which at least one board containing an electronic measuring system (28) may be plugged.

10. Housing according to one of the preceding claims, **characterised in that** light-emitting diodes (31, 32) for indication of quality and/or thread breakage are provided on the second housing part (13).

11. Housing according to one of the preceding claims, **characterised in that** the housing parts (12, 13) are designed as injection moulded parts consisting of a plastic, aluminium or zinc material.

12. Housing according to one of the preceding claims, **characterised in that** at least one thread tension sensor (1) is integrated therein as an independent modular unit, which is designed as a flat double bending beam (2) and which is equipped with a measuring pin (3) projecting to the front, which, in turn, is designed as a tube jointing sleeve (9) and into which a ceramic pin (10) is glued.

13. Housing according to one of the preceding claims, **characterised in that** an additional board (28) with an electronic measuring system is integrated therein as an independent modular unit which may be connected, via a soldered joint or a plug connection, to the thread tension sensor (1) and an external evaluation and/or power supply unit.

## Revendications

1. Boîtier pour capteur de tension de fil (1) qui comporte au moins une chambre (15) séparée destinée à loger le capteur de tension de fil (1) en tant que première partie de boîtier (12) et qui est recouverte par une deuxième partie du boîtier (13), où l'une au moins des parties du boîtier (12, 13) est prévu un dispositif de guidage de fil, qui dirige le fil (36), dont on veut mesurer la tension en lui donnant la forme d'un W passant autour d'un axe de mesure (3) du capteur (1), **caractérisé en ce que** la première partie du boîtier (12) comporte une chambre d'enfichage (15) servant à la fixation et l'ajustement précis du capteur (1) et présentant un évidement (21) latéral par lequel passe l'axe de mesure (3) et devant laquelle sont disposés au moins deux ergots d'entrée de fil (19, 20) entre lesquels se trouvent au moins deux guides d'entrée de fil (27) formant le dispositif guide-fil, et **en ce que** la deuxième partie du boîtier (13) comporte une chambre interne (34), qui est assemblée et fixée à la première partie du boîtier (12).

2. Boîtier selon la revendication 1, **caractérisé en ce que** la chambre d'enfichage (15) est disposée parallèlement à la paroi de montage postérieure (14) et que la chambre d'enfichage (15) est séparée par une paroi antérieure (22) face au dispositif de guidage de fil (22), et où les cotes internes de la chambre d'enfichage correspondent pour l'essentiel aux cotes de mesure extérieures de la double poutre de flexion comme capteur de tension de fil (1).

3. Boîtier selon les revendications 1 ou 2, **caractérisé en ce que** le dispositif de guidage de fil est constitué par deux ergots d'entrée de fil (19, 20) externes et deux guides d'entrée de fil (27) internes, qui sont disposés latéralement et symétriquement à l'axe de mesure (3) et ont la forme d'ergots parallèles (19, 20, 27) à l'axe de mesure (3).

4. Boîtier selon l'une des revendications précédentes, **caractérisé en ce que** les ergots d'entrée de fil (19, 20) sont reliés sur leur partie inférieure par une paroi de guidage inférieure (17), et présentent également une arête de guidage parallèle, comportant des encoches parallèles à l'axe de mesure (3), dans lesquelles sont enfichées en qualité de surface de guidage des goupilles en céramique (24) présentant chacune vers l'avant une arête de guidage arondie inclinée en pente, qui servent à l'enfilage.

5. Boîtier selon l'une des revendications précédentes, **caractérisé en ce que** les guides d'entrée du fil (27) sont des ergots en forme de talon dirigés vers le bas, qui passent parallèlement et latéralement à l'axe de mesure (3) et, par rapport à la paroi antérieure (22) se terminent devant les goupilles de céramique (24).

6. Boîtier selon l'une des revendications précédentes, **caractérisé en ce que** des goupilles en céramique (25) supplémentaires sont disposées dans la zone de passage du fil, devant et parallèlement à la paroi antérieure (22).

7. Boîtier selon l'une des revendications précédentes, **caractérisé en ce que** les guides d'entrée de fil (27) sont fixés à la deuxième partie du boîtier (13), sont enfichables, dépassant vers l'intérieur par deux encoches de guidage (26) dans la zone de guidage du fil de la première partie du boîtier (12).

8. Boîtier selon l'une des revendications précédentes, **caractérisé en ce que** la deuxième partie du boîtier (13) comporte une chambre interne (34), qui peut ainsi être reliée à la première partie du boîtier (12), et que les surfaces extérieures de la chambre interne (34) ferment la première partie du boîtier (12).

9. Boîtier selon l'une des revendications précédentes, **caractérisé en ce que** la deuxième partie du boîtier (13) comporte des gorges de guidage (35), dans lesquelles peut être enfichée au moins une platine d'électronique de mesure (28).

10. Boîtier selon l'une des revendications précédentes, **caractérisé en ce que** sur la deuxième partie du boîtier (13) sont prévues des diodes électroluminescentes (31, 32) pour l'affichage de la qualité et/ou de la rupture du fil.

11. Boîtier selon l'une des revendications précédentes, **caractérisé en ce que** les parties de boîtier (12, 13) sont formés par des pièces moulées par injection en matière synthétique, en aluminium ou en zinc.

12. Boîtier selon l'une des revendications précédentes, **caractérisé en ce que** au moins un capteur de tension de fil (1) y est intégré comme élément autonome, ayant la forme d'une double poutre de flexion plate (2) et qui présente un axe de mesure dépassant vers l'avant (3), ayant la forme d'une douille tubulaire (9) et dans lequel est encollée une goupille en céramique (10).

13. Boîtier selon l'une des revendications précédentes, **caractérisé en ce qu'** en complément, une platine électronique de mesure (28) y est intégrée comme élément autonome, pouvant être relié à un dispositif externe d'interprétation et/ou un bloc d'alimentation, au moyen d'un connecteur ou d'une liaison soudée.
